# EUROPÄISCHE PATENTANMELDUNG

(11) **EP 2 944 413 A1**
(43) Veröffentlichungstag der Anmeldung: **18.11.2015**
(21) Anmeldenummer: 14167931.6
(22) Anmeldetag: 12.05.2014
(51) Int. Cl.: B23K 26/04, B23K 26/06, B23K 26/12, B23K 26/16

(54) **Vorrichtung zur Maskenprojektion von Femtosekunden- und Pikosekunden- Laserstrahlen mit einer Blende, einer Maske und Linsensystemen**

(71) Anmelder: Boegli-Gravures S.A., 2074 Marin-Epagnier (CH)
(72) Erfinder: Reisse, Günter, 09117 Chemnitz (DE); Weissmantel, Steffen, 09117 Chemnitz (DE); Engel, Andy, 04680 Colditz (DE); Pfeiffer, Manuel, 09648 Mittweida (DE); Kratsch, Alexander, 09648 Mittweida (DE); Boegli, Charles, 2074 Marin-Epagnier (CH); Kahl, Matthias, 2074 Marin-Epagnier (CH)
(74) Vertreter: Weihs, Bruno Konrad

(57) **Zusammenfassung**

Eine Vorrichtung zur Maskenprojektion von Femto- und Pikosekunden-Laserstrahlen auf eine Substratoberfläche (12), in der, der aus Laserstrahlpulsen bestehende Laserstrahl (2) an einem Ort (P) der optischen Achse (5) zu Laserstrahlpulsen mit vergrößertem Laserstrahlquerschnitt oder zu Laserstrahlpulsen mit verkleinertem Laserstrahlquerschnitt geformt ist und eine homogene Intensitätsverteilung über den Laserstrahlquerschnitt besitzt. An dem Ort (P) sind nacheinander eine Blende (6) mit vorgegebener Blendenöffnungsgeometrie und eine Maske (7) mit vorgegebener Maskenöffnungsgeometrie in den Strahlengang positioniert. Die Vorrichtung beinhaltet weiter ein Feldlinsensystem (8) und ein Abbildungsobjektiv (10), derart positioniert, dass die von der Blende (6) und der Maske (7) transmittierten ungebeugten und gebeugten Strahlanteile der Laserstrahlpulse mit Hilfe des Feldlinsensystems (8) so in das Abbildungsobjektiv (10) mit vorgegebener Apertur gelenkt werden, dass in der Abbildungsebene eine detailgenaue, mit einem vorgegebenen Abbildungsverhältnis, verkleinerte Abbildung des von der Blende (6) und der Maske (7) erzeugten Intensitätsprofils über den Laserstrahlquerschnitt der Laserstrahlpulse entsteht. In einer Strahlführungsvariante 1 werden ein Zusatzlinsensystem (16), das Feldlinsensystem (8) und das Abbildungsobjektiv 810) relativ zueinander so positioniert, dass ein Fokus 1 zwischen dem Abbildungsobjektiv (10) und der Substratoberfläche (12) entsteht und in einer Strahlführungsvariante 2 werden das Zusatzlinsensystem (16), das Feldlinsensystem (8) und das Abbildungsobjektiv (10) relativ zueinander so positioniert, dass ein Fokus 2 zwischen dem Feldlinsensystem (8) und dem Abbildungsobjektiv (10) entsteht. Mindestens eine Vakuumküvette (20), die den Bereich des Fokus 1 bzw. des Fokus 2 umschließt ist vorhanden.

## Beschreibung

### Technisches Gebiet

Die Erfindung betrifft eine Vorrichtung zur Maskenprojektion von Femtosekunden- und Pikosekunden- Laserstrahlen.

### Stand der Technik

Verfahren und Vorrichtungen zur Maskenprojektion von Excimer-Laser-Strahlen sind bereits bekannt und werden zur Mikrostrukturierung von Festkörperoberflächen und insbesondere auch zur Erzeugung von dreidimensionalen Mikrostrukturen durch strukturierten schichtweisen Materialabtrag mit Hilfe von Excimerlasern eingesetzt (siehe u.a. Excimer laser technology, Ed. Dr. Dirk Basting, Lambda Physik AG Göttingen 2001, ISBN 3-00-006395-1, und Weissmantel, S.; Reisse, G.; Haehnel, F.; Bertram, R.; Boettcher, R.; Production of microstructures in wide-band-gap and organic materials using pulsed laser ablation at 157 nm wavelength; Applied Physics A 101 (2010) 491.). Bei diesen Verfahren wird der von einem Excimer-Laser mit einer Wellenlängen von 157 nm, 193 nm, 248 nm, 308 nm oder 351 nm emittierte Laserstrahl, der einen nahezu rechteckigen Querschnitt, eine inhomogene Intensitätsverteilung über den Laserstrahlquerschnitt und eine geringe Kohärenzlänge besitzt und sich deshalb ohne weitere Strahlformung nicht zur Mikrostrukturierung eingesetzt werden kann, mittels eines Homogenisierers, der den Laserstrahl in eine vorgegebene Zahl von Teilstrahlen zerlegt und diese vorzugsweise wieder übereinanderlegt, und einer Feldlinse zu einem Laserstrahl mit vorgegebenem quadratischen Laserstrahlquerschnitt mit homogener Intensitätsverteilung (top flat Intensitätsprofil) im so genannten homogenen Fleck am Ort P in Strahlausbreitungsrichtung geformt. An diesem Ort P wird eine Maske mit vorgegebener Geometrie der transmittierenden Maskenflächenbereiche positioniert. Durch den Einsatz dieser Maske wird aus der homogenen Intensitätsverteilung des Laserstrahls im homogenen Fleck das für die zu erzeugende Mikrostruktur erforderliche Intensitätsprofil über den Laserstrahlquerschnitt, z.B. ein gitterförmiges Intensitätsprofil, geformt und mittels einer für die Excimerlaser-Wellenlänge geeigneten Fokussieroptik mit einem vorgegebenen verkleinernden Abbildungsverhältnis auf dem zu strukturierenden Substrat abgebildet. Die geometrische Form der transmittierenden Fläche bzw. der Öffnung einer Blende, die in geringem Abstand vor oder nach der Maske oder vorzugsweise in Kontakt mit dieser angeordnet ist, erzeugt dabei die Querschnittsgeometrie (Umrissform) des durch die Maske geformten Intensitätsprofils des Laserstrahls (siehe beispielsweise Veröffentlichungen WO2010111798 und EP 2 336 823 A1). Die mittels des Excimerlaser-Maskenprojektionsverfahrens erreichbaren minimalen Strukturabmessungen liegen im Bereich von wenigen Mikrometern.

Weiter vergleichbare Verfahren und Vorrichtungen zur Maskenprojektion von Femtosekunden-Laserstrahlen und Pikosekunden-Laserstrahlen sind nach den Recherchen der Erfinder nicht bekannt. Femtosekunden-Laser (fs-Laser) und Pikosekunden-Laser (ps-Laser) emittieren Laserstrahlen mit zentralen Wellenlängen vorwiegend im Bereich von 775 nm bis 1064 nm, mit nahezu gaußförmiger Intensitätsverteilung über den Laserstrahlquerschnitt und mit wesentlich größerer Kohärenzlänge als die Excimerlaser. Diese fs- und ps-Laserstrahlen werden mittels handelsüblicher Fokussieroptiken zu Strahlen mit geringem Fokusquerschnitt geformt und beispielsweise auch zur Mikrostrukturierung von Festkörperoberflächen eingesetzt. Bei diesem Fokusverfahren ist die Intensitätsverteilung über den Fokusquerschnitt des Laserstrahls folglich ebenfalls gaußförmig und nicht homogen; am Ort des gaußschen Radius beträgt die Intensität nur das 1/e - fache, d.h. 36,8%, und am Ort des Strahlradius nur das 1/e² - fache, d.h. 13,5 %, des Wertes im Strahlzentrum.

Zur Erzeugung einer homogeneren Intensitätsverteilung über den Fokusquerschnitt von fs- und ps-Laserstrahlen sind Strahlhomogenisierer entwickelt worden, die zwischen Laserausgang und Fokussieroptik angeordnet werden. In den bisher bekannten Strahlhomogenisierern für fs- und ps-Laserstrahlen (siehe z.B. A. Laskin und V. Laskin, πShaper - Refractive Beam Shaping Optics for Advanced Laser Technologies in Journal of Physics: Conference Series 276 (2011) 012171) wird ein Teil der Fluenz vom Inneren des Strahlquerschnitts mittels eines refraktiven Linsensystems zum Äußeren des Strahlquerschnitts transportiert, so dass nach dem Strahlhomogenisierer eine homogenere Intensitätsverteilung über den Laserstrahlquerschnitt entsteht, ein flat top Intensitätsprofil über den gesamten Strahlquerschnitt wurde jedoch bisher nur annähernd erreicht.

Der Fokusradius des gaußverteilten Laserstrahls ist eine Funktion der Wellenlänge, des Radiuses des vom Laser emittierten Rohstrahls und der Fokusentfernung und lässt sich nicht beliebig verkleinern. In einer fs-Lasermikrostrukturierungsanlage vom Typ FS-150-10 der Firma 3D-Micromac AG Chemnitz mit einem Laser vom Typ CPA 2010 der Firma Clark Inc., USA, mit 775 nm zentrale Wellenlänge und 1 mJ (1 Millijoule) Pulsenergie und 150 fs Pulsdauer beträgt beispielsweise der kleinste Gaußsche Fokusradius 5,7 µm mit einem Objektiv mit 32 mm Brennweite, trotz 2-facher Strahlaufweitung von 3 mm Gaußschem Radius auf 6 mm und Homogenisierung.

### Nachteile der bekannten fs- und ps- Fokusverfahren

Die erreichbaren Fokusradien von minimal wenigen Mikrometern sind für eine Vielzahl von Anwendungen im Bereich der Mikro- und Nanostrukturierung zu groß, Strukturabmessungen von wenigen Mikrometern (µm) und darunter sind nicht erreichbar. Die Kantenschärfe der mittels des Fokusverfahrens erzeugten Mikrostrukturen mit Abmessungen von bis zu einigen zehn Mikrometern ist beispielsweise auch bei Pulsüberlappung des Laserstrahls zu gering. Optisch wirkende Transmissions- und Reflexionsgitter mit Gitterkonstanten bis zu einem Mikrometer und darunter für den sichtbaren Wellenlängenbereich können z.B. mit Hilfe des Fokusverfahrens nicht hergestellt werden.

Durch die gaußförmige Intensitätsverteilung über den Laserstrahlquerschnitt sind die Abtragstiefen über den Fokusquerschnitt und damit über die Breite einer strukturierten Spur in der Spurmitte wesentlich größer als am Spurrand. Dies führt beispielsweise beim mäanderförmigen Linienscan des fokussierten Laserstrahls zur Erzeugung eines flächenhaften Materialabtrags auch bei Spurüberlappung zu einer hohen Oberflächenrauhigkeit. Bei der Mikrostrukturierung und beim Trennen von Schichtstapeln, die aus mehreren Subschichten aus unterschiedlichen Materialien mit wenigen Nanometern Dicke bestehen, führt diese Intensitätsverteilung beispielsweise zum unvollständigen Schichtabtrag an den Spurrändern oder zur Beschädigung des Substratmaterials in Spurmitte. Bei Spurbreiten von größer 10 Mikrometer kann dieser Nachteil durch Einsatz eines Strahlhomogenisierers teilweise behoben werden; geringere Spurbreiten bis zu 1 Mikrometer und darunter mit gleichmäßiger Abtragstiefe sind aber mit Hilfe das Fokusverfahrens nicht zu erreichen.

Die Erzeugung eines vorgegeben strukturierten Intensitätsprofils über den Laserstrahlquerschnitt ist beim Fokusverfahren nicht möglich.

### Zusammenfassung der Erfindung

Mit der erfindungsgemäßen Lösung sollen die Nachteile der bisher eingesetzten fs- und ps-Fokusverfahren überwunden werden. Insbesondere sollen eine homogene Intensitätsverteilung über den gesamten Abbildungsquerschnitt auf der zu bearbeitenden Substratoberfläche (Werkstückoberfläche) und, im Vergleich zu den mit dem Fokusverfahren einstellbaren Fokusquerschnitten, wesentlich kleinere Abbildungsquerschnitte, beispielsweise eine kreisförmige Abbildungsquerschnittsfläche von 1 µm Durchmesser bzw. eine quadratische Abbildungsquerschnittsfläche von 1 µm² bei zentralen Laserstrahlgrundwellenlängen vorzugsweise im Bereich von 775 nm bis 1064 nm sowie bei Einsatz der Frequenzverdopplung (SHG) oder Frequenzverdreifachung (THG) oder Frequenzvervierfachung (FHG) des Laserstrahls auch darunter, d.h. im Bereich von einigen 100 Nanometern, erreicht werden.

Bei genügend hoher Pulsenergie des fs- und ps-Lasers von wenigstens 1 mJ und der daraus resultierenden und auch von der für die Strukturierung erforderliche Strahlintensität und dem Abbildungsverhältnis abhängigen möglichen einstellbaren Querschnittsgröße des homogenen Flecks soll des Weiteren mit Hilfe einer im homogenen Fleck positionierten Maske mit vorgegebener Geometrie der transmittierenden Maskenflächenbereiche aus der homogenen Intensitätsverteilung des Laserstrahls auch das für die Erzeugung einer vorgegebenen Mikrostruktur erforderliche Intensitätsprofil über den Laserstrahlquerschnitt, z.B. ein gitterförmiges Intensitätsprofil, geformt und mittels einer geeigneten Fokussieroptik mit einem vorgegebenen verkleinernden Abbildungsverhältnis auf dem zu strukturierenden Substrat abgebildet werden können.

Die erfindungsgemäße Lösung beinhaltet eine Vorrichtung zur Maskenprojektion von Femto- und Pikosekunden-Laserstrahlen auf eine Substratoberfläche, in der, der aus Laserstrahlpulsen bestehende Laserstrahl an einem Ort der optischen Achse zu Laserstrahlpulsen mit vergrößertem Laserstrahlquerschnitt oder zu Laserstrahlpulsen mit verkleinertem Laserstrahlquerschnitt geformt ist und eine homogene Intensitätsverteilung über den Laserstrahlquerschnitt besitzt. An dem Ort sind nacheinander eine Blende mit vorgegebener Blendenöffnungsgeometrie und eine Maske mit vorgegebener Maskenöffnungsgeometrie in den Strahlengang positioniert. Die Vorrichtung beinhaltet weiter ein Feldlinsensystem und ein Abbildungsobjektiv, derart positioniert, dass die von der Blende und der Maske transmittierten ungebeugten und gebeugten Strahlanteile der Laserstrahlpulse mit Hilfe des Feldlinsensystems so in das Abbildungsobjektiv mit vorgegebener Apertur gelenkt werden, dass in der Abbildungsebene eine detailgenaue, mit einem vorgegebenen Abbildungsverhältnis, verkleinerte Abbildung des von der Blende und der Maske erzeugten Intensitätsprofils über den Laserstrahlquerschnitt der Laserstrahlpulse entsteht. In einer Strahlführungsvariante 1 werden ein Zusatzlinsensystem, das Feldlinsensystem und das Abbildungsobjektiv relativ zueinander so positioniert, dass ein Fokus 1 zwischen dem Abbildungsobjektiv und der Substratoberfläche entsteht und in einer Strahlführungsvariante 2 werden das Zusatzlinsensystem, das Feldlinsensystem und das Abbildungsobjektiv relativ zueinander so positioniert, dass ein Fokus 2 zwischen dem Feldlinsensystem und dem Abbildungsobjektiv entsteht. Mindestens eine Vakuumküvette, die den Bereich des Fokus 1 bzw. des Fokus 2 umschließt ist vorhanden.

In einer weiteren bevorzugten Ausführung ist zwischen dem Feldlinsensystem und dem Abbildungsobjektiv ein 90°-Umlenkspiegel angeordnet.

In einer weiteren bevorzugten Ausführung sind Mittel zur Variation des Abstandes zwischen der Hauptebene des Abbildungsobjektivs und der Substratoberfläche vorhanden, mit dessen Hilfe die Abbildungsebene, deren vorgegebene Position im Abstand der Bildweite von der Hauptebene des Abbildungsobjektivs durch Variation des Abstandes zwischen der Hauptebene des Abbildungsobjektivs und der Substratoberfläche wahlweise über, auf oder unter die Substratoberfläche gelegt wird.

In einer weiteren bevorzugten Ausführung sind die Mittel zur Variation des Abstandes zwischen der Hauptebene des Abbildungsobjektivs und der Substratoberfläche die z-Achse des xyz-Koordinatentischs, auf dem das Substrat befestigt ist.

In einer weiteren bevorzugten Ausführung sind die Mittel zur Variation des Abstandes zwischen der Hauptebene des Abbildungsobjektivs und der Substratoberfläche die Linearachsen, mit deren Hilfe das an diesen Linearachsen befestigte Feldlinsensystem und das Abbildungsobjektiv entlang der optischen Achse um einen vorgegebenen Weg verschiebbar angeordnet sind.

In einer weiteren bevorzugten Ausführung ist in der Strahlführungsvariante 1 zwischen der mindestens einen Vakuumküvette und der Substratoberfläche eine Cross-Jet-Schutzgasdüse angeordnet.

In einer weiteren bevorzugten Ausführung ist in der Strahlführungsvariante 2 zwischen dem Abbildungsobjektiv und der Substratoberfläche eine Schutzgasdüsensystem angebracht.

In einer weiteren bevorzugten Ausführung sind die Aperturen der optischen Bauteile, die wenigstens das Feldlinsensystem, das Abbildungsobjektiv und die mindestens eine Vakuumküvette umfassen, so groß gewählt, dass auch die infolge der vorgegebenen Maskenöffnungsgeometrie der Maske, gebeugten Laserstrahlanteile von der ersten bis wenigstens zur dritten Beugungsordnung auf der Substratoberfläche mit abgebildet werden.

In einer weiteren bevorzugten Ausführung wird der eingesetzte Laser im *burst mode* betrieben.

In einer weiteren bevorzugten Ausführung umfasst die Vorrichtung weiter einen Strahlaufweiter oder einen Strahlquerschnittsverringerer; und eine zwischen dem Laser und dem Strahlaufweiter oder Strahlquerschnittsverringerer positionierte Vorrichtung zur Erzeugung der zweiten Harmonischen (Frequenzverdopplung, SHG) oder der dritten Harmonischen (Frequenzverdreifachung, THG) oder der vierten Harmonischen (Frequenzvervierfachung, FHG). Die Femtosekunden-Laserstrahl-Pulse oder die Pikosekunden-Laserstrahl-Pulse durchlaufen nach ihrem Austritt aus dem Laser jeweils die Vorrichtung zur Erzeugung der zweiten Harmonischen (Frequenzverdopplung, SHG) oder der dritten Harmonischen (Frequenzverdreifachung, THG) oder der vierten Harmonischen (Frequenzvervierfachung, FHG), und wenigstens sind der Strahlaufweiter oder Strahlquerschnittsverringerer, das Zusatzlinsensystem, die Blende, die Maske, das Feldlinsensystem, das Abbildungsobjektiv und die mindestens eine Vakuumküvette für die Transmission der entstehenden Photonenstrahlung mit der halben oder eindrittel oder einviertel der Grund-Wellenlänge geeignet konstruiert.

### Kurze Beschreibung der Zeichnungen

Die Erfindung wird im Folgenden anhand schematisierter Zeichnungen näher erläutert:
Fig. 1 zeigt die schematische Anordnung der optischen Bauelemente des Strahlführungs- und -Formungssystems zur Realisierung des Femtosekunden- und Pikosekunden-Laser-Maskenprojektionsverfahrens (fspsMP);
Fig. 2 zeigt den berechneten optischen Weg der Laserstrahlen im Strahlführungs- und -Formungssystems gemäß Fig. 1 für die Strahlführungsvariante 1 mit den Fokuslagen zwischen Zusatzlinse (16) und Maske (7) und zwischen Objektiv (10) und Substrat (13);
Fig. 3 zeigt den berechneten optischen Weg der Laserstrahlen im Strahlführungs- und -Formungssystems gemäß Fig. 1 für die Strahlführungsvariante 2 mit den Fokuslagen zwischen Zusatzlinse (16) und Maske (7) und zwischen Feldlinsensystem (8) und Objektiv (10);
Fig. 4a zeigt schematisch den Querschnitt der Vakuum-Küvette 1, die zwischen Zusatzlinse (16) und Maske (7) angeordnet ist, und der gleichartigen Vakuumküvette 3, die zwischen Feldlinsensystem (8) und Objektiv (10) angeordnet ist;
Fig. 4b zeigt schematisch den Querschnitt der Vakuumküvette 2, die zwischen Objektiv (10) und Substrat (13) angeordnet ist, mit angefügter Cross-Jet-Schutzgasdüse (21); und
Fig. 5 zeigt beispielhaft die Anordnung der optischen Bauelemente eines realisierten Femtosekunden- und Pikosekunden-Laser-Maskenprojektionssystems mit vier Umlenkspiegeln zur Verkleinerung der Gesamtabmessungen des Systems.

### Beschreibung der erfindungsgemäßen Lösung

### Anordnung der optischen Bauelemente:

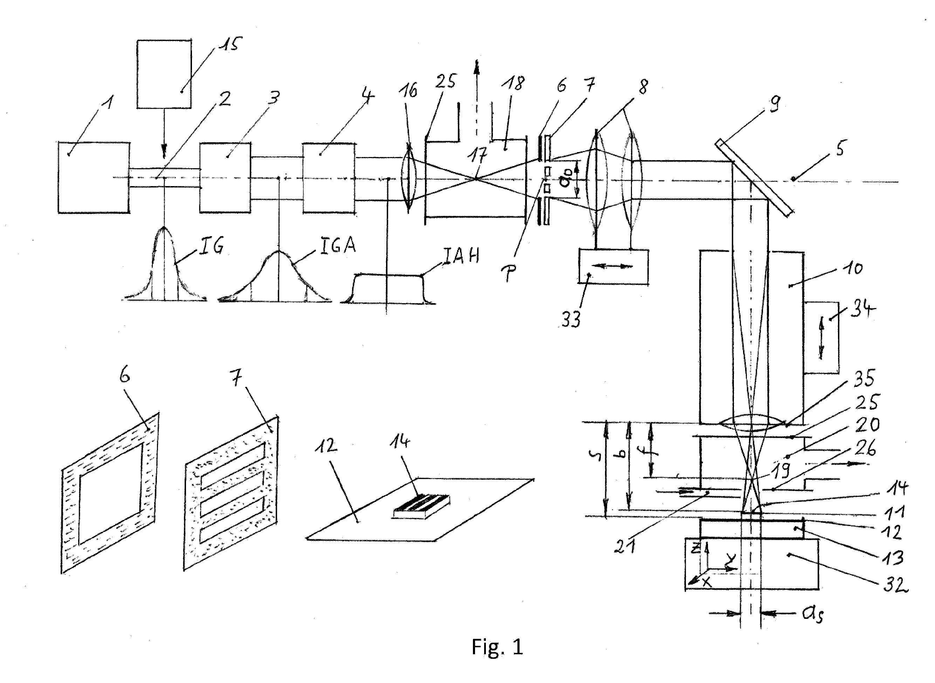

Gemäß Fig. 1 wird der gepulste Laserstrahl (2) eines Femto- oder Pikosenkundenlasers mit annähernd gaußförmiger Intensitätsverteilung über den Laserstrahlquerschnitt (IG) nach seinem Austritt aus dem Laser (1) mit Hilfe von wenigstens einem Strahlaufweiter (3) zu einem Laserstrahl mit weiterhin annähernd gaußförmiger Intensitätsverteilung aber vergrößertem Querschnitt (IGA) geformt.

Danach passiert der Laserstrahl einen Strahlhomogenisierer (4) und wahlweise noch eine Zusatzlinse oder ein Zusatzlinsensystem (16), die im homogenen Fleck am Ort (P) auf der optischen Achse (5) des Laserstrahls (Strahlachse) eine homogene, als top-flat Intensitätsprofil bezeichnete Intensitätsverteilung (IAH) des Laserstrahls erzeugen.

Zur Erzeugung eines vorgegeben strukturierten Intensitätsprofils der Laserstrahlpulse über den Laserstrahlquerschnitt werden nacheinander, in sehr geringem Abstand zueinander von bis zu wenigen zehntel Millimeter oder im Kontakt miteinander, eine Blende (6) mit vorgegebener Blendenöffnungsgeometrie und eine Maske (7) mit vorgegebener Maskenöffnungsgeometrie am Ort (P) positioniert. Die von der Blende (6) und der im homogenen Fleck am Ort (P) positionierten Maske (7) transmittierten ungebeugten und gebeugten Strahlanteile der Laserstrahlpulse werden mit Hilfe einer Feldlinse oder eines Feldlinsensystems (8) und, nach der Reflexion an wenigstens einem 90°-Umlenkspiegel (9), eines Objektivs (10) in der Abbildungsebene (11) abgebildet. In der Abbildungsebene (11), deren vorgegebene Position im Abstand der Bildweite b von der Hauptebene (35) des Objektiv (10) durch Variation des Abstandes (s) zwischen der Hauptebene (35) des Objektivs (10) und der Oberfläche (12) des Substrats (13) wahlweise über (siehe Fig. 1), vorzugsweise aber auf oder unter die Substratoberfläche (12) gelegt wird, entsteht eine detailgenaue, mit einem vorgegebenen Abbildungsverhältnis (V = (a_{O} / a_{S}) : 1), verkleinerte Abbildung (14) des von der Blende und der Maske erzeugten vorgegeben strukturierten Intensitätsprofils über den Laserstrahlquerschnitt.

Die Variation des Abstandes (s) zwischen der Hauptebene (35) des Abbildungsobjektivs (10) und der Substratoberfläche (12) erfolgt vorzugsweise mit Hilfe der z-Achse des xyz-Koordinatentischs (32), auf dem das Substrat (13) positioniert ist. Bei nicht verfahrbarem Substrat kann die Variation des Abstands (s) auch mit Hilfe der Linearachsen (33, 34) erfolgen, an denen die Feldlinse bzw. das Feldlinsensystem (8) und das Objektiv (10) befestigt sind und somit um einen vorgegeben Weg entlang der optischen Achse (5) verschiebbar sind, ohne dass sich die Abbildungseigenschaften des optischen Systems ändern.

Die mittels des Strahlaufweiters (3) realisierbare Querschnittsvergrößerung des Laserstrahls, der aus dieser Querschnittsvergrößerung und der Fokusentfernung (Brennweite) der Zusatzlinse oder des Zusatzlinsensystems (16) resultierende Querschnitt des Laserstrahls im homogenen Fleck in der Ebene der Maske (7) und das realisierbare Abbildungsverhältnis V hängen von der Pulsenergie des Laserstrahls ab und müssen so aufeinander abgestimmt werden, dass in der Abbildungsebene (11) die für den geplanten Laserbearbeitungsprozess erforderliche Laserstrahlfluenz erreicht wird. Wenn der vom Laser emittierte Strahl eine zu geringe Pulsenergie besitzt, so dass in der Ebene der Maske (7) die Fluenz zu klein ist, um beim vorgegebenen Abbildungsverhältnis V die notwendige Fluenz für den Materialabtrag in der Abbildungsebene (11) zu erreichen, muss an Stelle des Strahlaufweiters (3) ein Strahlquerschnittsverringerer eingesetzt werden. Das kann z.B. bei Frequenzverdopplung (SHG) oder Frequenzverdreifachung (THG) oder Frequenzvervierfachung (FHG) der Grundwellenlänge des Laserstrahls mit Hilfe der optionalen Vorrichtung (15) erforderlich sein; bei der Frequenzverdopplung des Lasers vom Typ CPA 2010 der Firma Clark Inc. mit 775 nm zentraler Grundwellenlänge stehen beispielsweise nur etwa 40 % und bei Frequenzverdreifachung stehen nur noch 6-8 % der ursprünglichen Pulsenergie des Laserstrahls mit der Grundwellenlänge zur Verfügung. Die nutzbare Maskenfläche wäre dann aber sehr klein, sie würde jedoch ausreichen, um mit einer kleinen Blenden- bzw. Maskenöffnung, d.h. mit einem sehr geringen Abbildungsquerschnitt von beispielsweise 1 µm² und darunter auf dem Substrat, sehr feine Bohrungen und genaue Strukturkanten sowie beim schichtweisen strukturierten Materialabtrag auch sehr kleine dreidimensionale Mikrostrukturen (3d-Strukturen) zu erzeugen.

Eine detailgenaue, mit einem vorgegebenen Abbildungsverhältnis (V), verkleinerte Abbildung (14) des von der Blende (6) und der Maske (7) erzeugten Intensitätsprofils über den Laserstrahlquerschnitt und damit die Erzeugung von vorgegebenen Mikrostrukturen mit Hilfe des fs- und ps-Maskenprojektionsverfahrens ist nur dann möglich, wenn auch die an den transmittierenden Maskenbereichen, z.B. an einer Strichgitter-Maske, gebeugten Laserstrahlanteile zur Abbildungsebene (11) gelangen und zur Abbildung beitragen, da sonst ein Informationsverlust auftritt und die Transmissionsgeometrie der Maske und damit das von der Maske erzeugte, vorgegebene strukturierte Intensitätsprofil des Laserstrahls nur ungenau in der Abbildungsebene abgebildet wird. Alle optischen Bauteile, die nach der Maske (7) angeordnet sind, müssen deshalb eine genügend große Apertur besitzen, damit auch die gebeugten Laserstrahlanteile abgebildet werden und mit zur Abbildung beitragen können. Simulationsrechnungen und Experimente habe ergeben, dass die erste bis wenigstens die dritte Beugungsordnung mit abgebildet werden muss, um eine detailgenaue Abbildung des von der Maske erzeugten Intensitätsprofils der Laserstrahlung in der Abbildungsebene (11) zu erhalten.

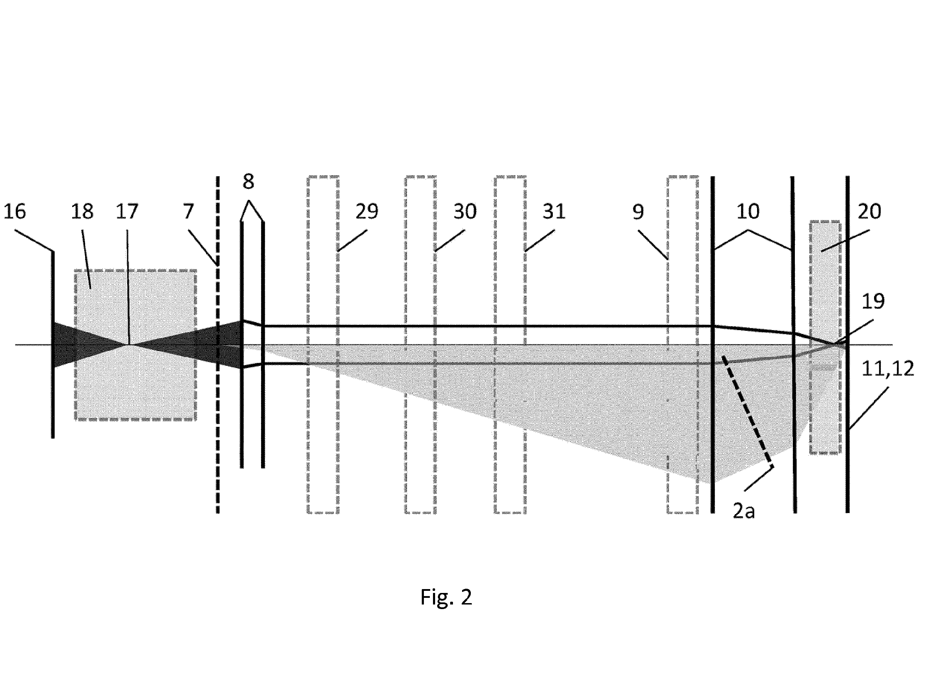

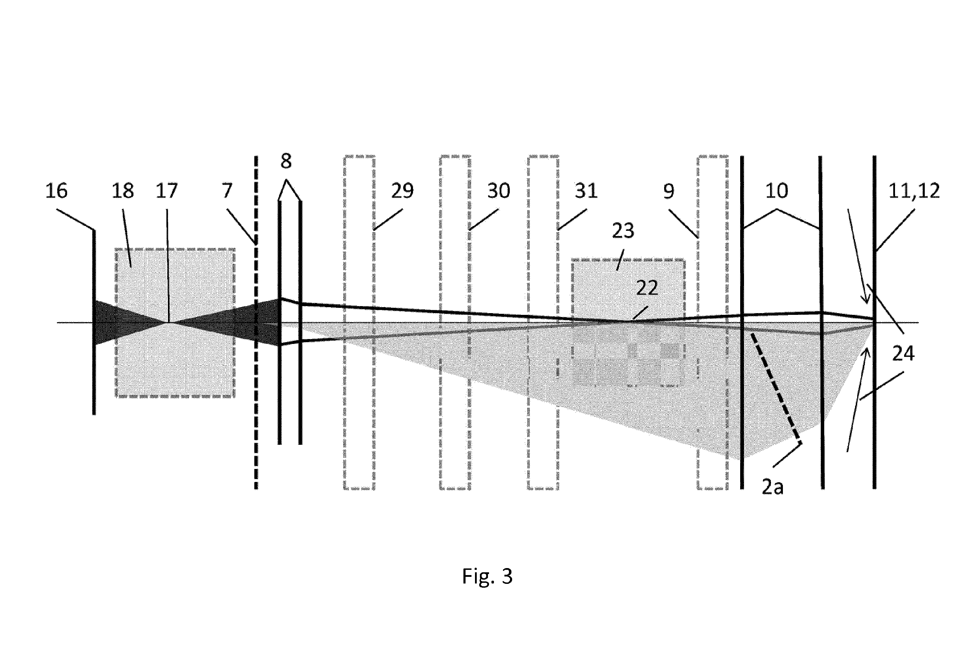

Die hohen Photonendichten in den Laserstrahlfokussen von fs- und ps-Laserstrahlen führen zur Entstehung von intensiven Luft-Plasmen bzw. Plasmen des im Strahlengang zum Schutz der optischen Bauelemente vor Kontaminationen eingesetzten Schutzgases in den Fokusbereichen des Strahlführungs- und -Formungssystems (siehe auch Fig. 2 und 3). Diese laserinduzierten Plasmen bewirken eine Absorption und Streuung von Laserstrahlanteilen mit folgenden Auswirkungen: das durch den Zwischenfokus (17) im Strahlengang des Laserstrahls zwischen Strahlhomogenisierer (4) und der Maske (7) gezündete Plasma verringert die Homogenität der Fluenzverteilung des Laserstrahls in der Ebene der Maske (7) und das durch den Fokus 1 (19) in der Fokusentfernung f des Objektivs (10) oder das durch den Fokus 2 (22) zwischen dem Feldlinsensystem (8) und dem Objektiv (10) gezündete Plasma führt zur Verringerung der Qualität der abgebildeten Maskenöffnungsgeometrie, z.B. zur Verringerung der Schärfe von Kanten, in der Abbildungsebene (11), so dass kein homogener Materialabtrag über die durch die Öffnungsgeometrien der Maske (7) vorgegebene Flächenbereiche auf dem Substrat (13) erfolgt. Diese Plasmen beeinflussen somit, insbesondere bei hohen Pulswiederholfrequenzen (Repetitionsraten) des Lasers, die optische Qualität der nachfolgenden Laserstrahlanteile und verursachen eine Verringerung der Detailgenauigkeit der Abbildung und damit auch der erzeugten Mikrostrukturen.

Um das Auftreten dieser Plasmen zu vermeiden, werden im Bereich der Fokusse (17, 19, 22) Vakuumküvetten (18, 20, 23) in den Strahlengang eingefügt. Diese Küvetten umgeben den Fokusbereich, besitzen zwei mit transmittierenden Interferenzschichtsystemen beschichtete Fenster (25) oder ein Fenster (25) und eine Lochblende (26) für die nahezu verlustlose Transmission der Laserstrahlung, werden bis wenigstens auf Vorvakuum evakuiert und müssen in die Berechnung des gesamten optischen Systems mit einbezogen werden. Alternativ kann auch das gesamte optische System, beginnend am Ausgang des Lasers (1) bis zu dem Abbildungsobjektiv (10) in eine Vakuumkammer positioniert werden.

Ein besonderer, bisher für ausgewählte ps-Laser-Typen entwickelter Betriebsmodus ist der "burst-mode". Im "burst mode" werden im Unterschied zum Einzelpulsbetrieb eines ps-Lasers mit einer vorgegebenen Repetitionsrate keine ps-Laserstrahlpulse sondern ps-Laserstrahl-Pulszüge generiert mit zeitlichen Puls zu Puls-Abständen der einzelnen Pulse im Zug ("burst") im Bereich von einigen Zehn Nanosekunden, typisch 20 ns, und zeitlichen Pulszug zu Pulszug-Abständen im Bereich von 10⁻³ bis 10⁻⁷ Sekunden, typisch 10 µs, d.h. mit einer Pulszug-Wiederholfrequenz (Repetitionsrate des Lasers) von 1kHz bis 10 MHz. Die mögliche maximale Repetitionsrate des ps-Lasers im "burst mode" hängt von der Anzahl der einzelnen Pulse im Pulszug ab und wird durch diese begrenzt. Die Pulsdauer der Einzelpulse des ps-Lasers und die Pulsdauern der Pulse im "burst mode" sind gleich. Ein Pulszug ("burst") kann, einstellbar, aus bis zu 20 einzelnen ps-Pulsen bestehen. Die Pulsenergie der einzelnen Pulse im Pulszug kann sich dabei nach einer für das Lasergerät typischen Funktion exponentiell verringern bei gleichem zeitlichen Puls zu Puls-Abstand der einzelnen Pulse im Pulszug (z.B. Pulszug des ps-Lasers vom Typ " Lumera Hyperrapid" der Firma "Lumera Laser GmbH") oder der Verlauf der Pulsenergie der Einzelpulse im Pulszug kann vorgegeben werden, so dass eine gleich bleibende Pulsenergie der Pulse im Pulszug oder eine Verringerung oder Vergrößerung der Pulsenergie der Pulse im Pulszug oder auch zuerst eine Verringerung und danach wieder eine Vergrößerung der Pulsenergie der Pulse im Pulszug möglich ist; des Weiteren können auch ein Puls oder mehrere Pulse im Pulszug unterdrückt werden (z.B. im "FlexBurst^{™}-Mode" bei den Lasertypen "Time-Bandwidth Duetto^{™}" und " Time-Bandwidth Fuego^{™}" der Firma "Time-Bandwidth Products"). Eine Frequenzverdopplung oder Frequenzverdreifachung (SHG oder THG) der Laserstrahlung ist auch im "burst mode"- Betrieb des ps-Lasers möglich. Die "burst mode"-Bearbeitung weist im Vergleich zur ps-Laser-Bearbeitung mit Einzelpulsen folgende Vorteile auf:
- höhere Abtragraten bei der Strukturierung von metallischen Werkstoffen im Vergleich zur ps-Pulsbestrahlung mit Einzelpulsen mit der gleichen Energie wie die Pulszug-Gesamtenergie, d.h. bei den gleichen Fluenzen der Einzelpulse und der Pulszüge, und bei gleichem Puls zu Puls - Abstand (Überlappungsgrad) der Einzelpulse und der Pulszüge, d.h. bei der gleichen Repetitionsrate der Einzelpulse wie die Pulszugrepetitionsrate;
- bessere Qualität, insbesondere geringere Flächenrauhigkeiten, der erzeugten Strukturformen in metallischen Werkstoffen im Vergleich zur ps-Pulsbestrahlung mit Einzelpulsen bei gleichem Überlappungsgrad, auch bei höheren Fluenzen des "burst".

Die Erzeugung des "burst mode" von Femtosekunden-Laserstrahlpulsen befindet sich gegenwärtig noch im Stadium der Grundlagenforschung (z.B. J. Hernandez-Ruedal, J. Siegel, D. Puerto2, M. Galvan-Sosa, W. Gawelda3, and J. Solis : Ad-hoc design of temporally shaped fs laser pulses based on plasma dynamics for deep ablation in fused silica, Appl.Phys. A (2013) 112).

### Strahlführungsvariante 1 im Strahlführungs- und -Formungssystem

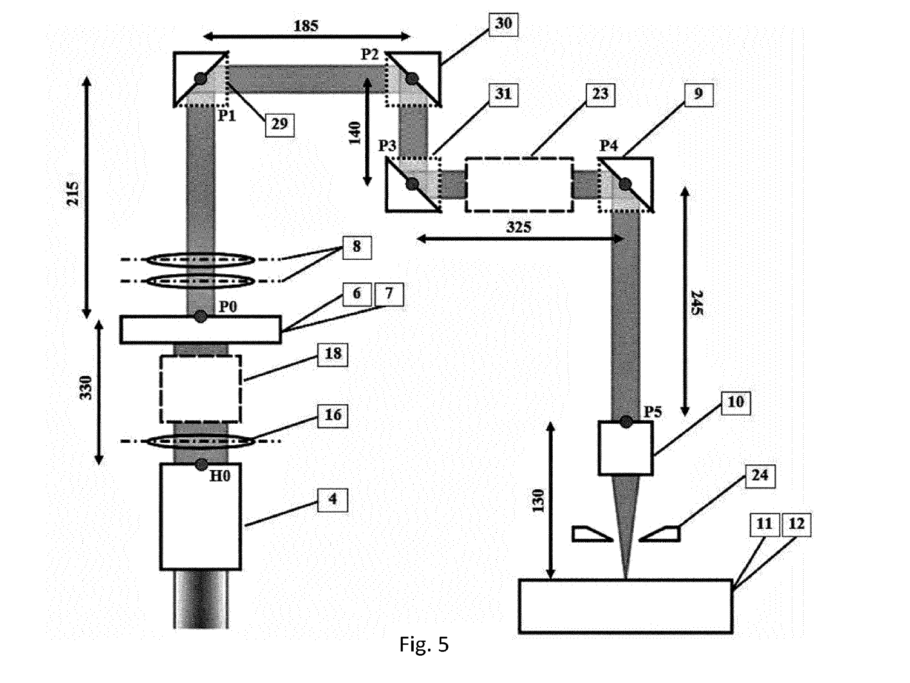

In der Strahlführungsvariante 1 gemäß Fig. 2 werden eine Zusatzlinse (16), ein beispielsweise aus zwei Linsen bestehendes Feldlinsensystem (8) und ein beispielsweise aus zwei Linsen bestehendes Objektiv (10) verwendet. In Fig. 2 sind nur die Hauptebenen der Linsen dargestellt. Der Zwischenfokus (17) des Strahlengangs befindet sich zwischen der Zusatzlinse (16) und der Blenden-Maskenkombination (6, 7). Der Fokus 1 (19) des aus dem Feldlinsensystem (8) und dem Objektiv (10) bestehenden abbildenden optischen Systems befindet sich zwischen Objektiv (10) und Substratoberfläche (12); die Abbildungsebene (11) befindet sich auf der Substratoberfläche (12). Der ausgemalte Bereich (2a) veranschaulicht die Propagation der gebeugten Laserstrahlanteile der Beugungsordnungen 1 bis 5 eines fs-Laserstrahls mit einer mittleren Wellenlänge von 775 nm, die beispielsweise vom Zentrum einer StrichGitter-Maske (7) mit einer Gitterperiode von 200 µm für die Erzeugung eines Strahl-Intensitätsprofils gemäß (14) in Fig. 1, jedoch mit einer in Fig. 1 nicht dargestellten höheren Anzahl von für die Strahlung transmittierenden und beugenden Spalten, ausgehen. Die Vakuumküvette 1 (18) umgibt den Zwischenfokus (17) und die Vakuumküvette 2 (20) umgibt den Fokus 1 (19). Die Abbildungsebene (11) befindet sich auf der Substratoberfläche (12). Die punktiert dargestellten Rechtecke deuten weitere 90° - Umlenkspiegel (29, 30, 31) an, die zur Faltung des Strahlengangs genutzt werden können und die Kompaktheit des gesamten Strahlführungs- und - formungssystems erhöhen (siehe Fig. 5). Wenn ein genügend langer Raum zur Verfügung steht, kann das gesamte optische System aber auch ohne die Umlenkspiegel (9, 29, 30, 31) realisiert werden.

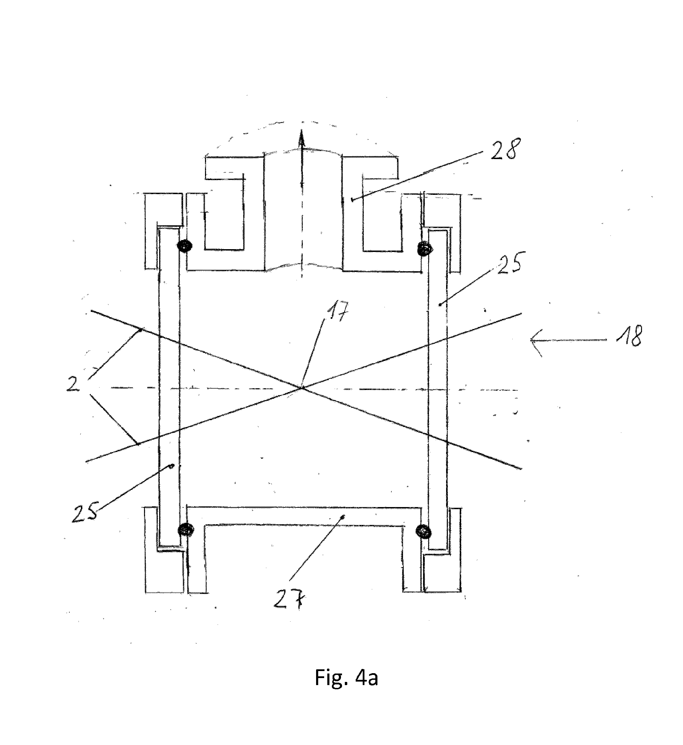

Die in Fig. 4a schematisch dargestellte Vakuumküvette 1 (18) besteht aus zwei auswechselbaren planparallelen kreisförmigen Fenstern (25) aus einem für die Laserwellenlänge transparenten Material und einem hohlzylinderförmigen Abstandshalter (27), der einen Flansch (28) für den Anschluss einer Vakuumpumpe besitzt. Die Fenster werden vakuumdicht am Abstandshalter befestigt. Die Vakuumküvette 1 (18) wird so positioniert, dass der Laserstrahlfokus (17) sich in ihrem Zentrum befindet. Um die Strahlenbelastung der Fenster (25), die beidseitig mit einem die Laserwellenlänge transmittierenden Interferenzschichtsystem beschichtet sind, möglichst gering zu halten, beträgt der Abstand zwischen den Fensterinnenflächen parallel zur optischen Achse wenigstens 100 mm.

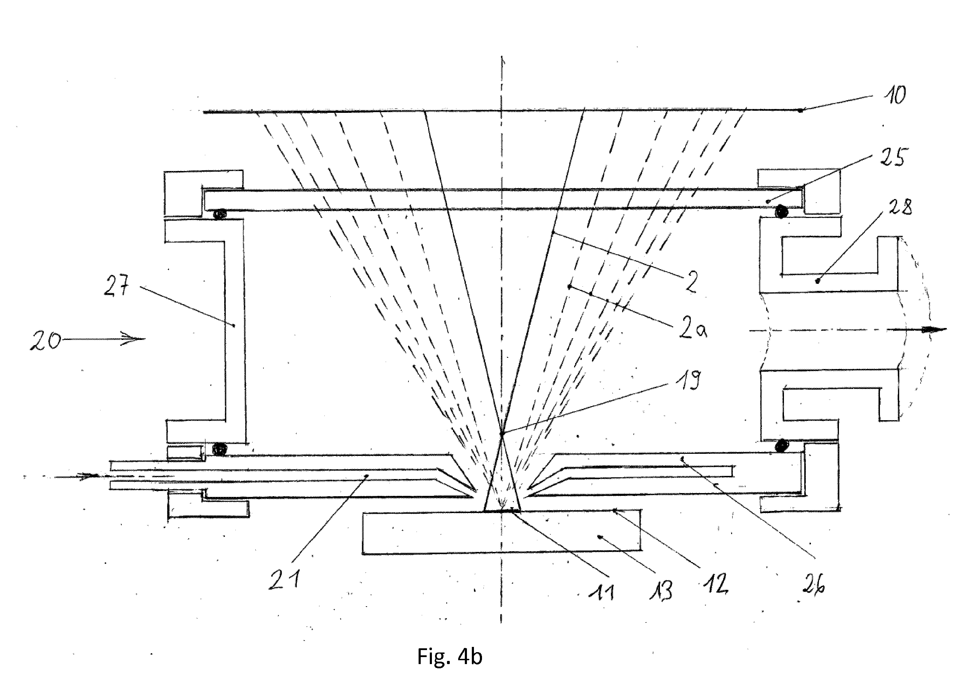

Die in Fig. 4b schematische dargestellte Vakuumküvette 2 (20) besitzt nur ein transmittierendes Fenster (25) für die Transmission der vom Objektiv kommenden Laserstrahlung; der Durchmesser der transmittierenden Fensterfläche muss so groß gewählt werden, dass auch die Propagation der gebeugten Laserstrahlanteile (2a) (siehe Fig. 2 ) wenigstens der Beugungsordnungen 1 bis 3 ungehindert möglich ist.

An Stelle des Fensters für den Austritt der Laserstrahlung nach dem Fokus in Richtung Substratoberfläche (12) ist eine Scheibe mit einer Lochblende (26) für die Transmission der Laserstrahlung eingefügt, weil die Intensität der Laserstrahlung in diesem Bereich über der Zerstörschwelle des Fenstermaterials liegen kann. Der Querschnitt der Lochblende (26) ist nur geringfügig größer als der Laserstrahlgesamtquerschnitt an diesem Ort und liegt insbesondere für die geplanten Anwendungen auf den Gebieten Mikro- und Nanostrukturierung im Bereich von einem bis zu einigen zehn Quadratmikrometern. Das für die Vermeidung eines Plasmas im Bereich des Fokus (19) erforderliche Vakuum wird mit Hilfe einer Vakuumpumpe mit genügend hoher Saugleistung erreicht. Zum Schutz des Fensters (25) der Vakuumküvette 2 (20) vor der Belegung mit ablatiertem Material vom Substrat (13) ist eine Cross-Jet-Schutzgasdüse (21) angebracht, die zwischen der Vakuumküvette (20) und dem Substrat (13) eine Quer-Gasströmung erzeugt.

Die Strahlführungsvariante 1 ist vorzugsweise für die Realisierung geringster Abbildungsquerschnitte zur Erzeugung von Strukturen mit Detailabmessungen im Mikro- und Nano-Meterbereich geeignet, da nach dem Fokus 1 keine weiteren optischen Bauelemente vorhanden sind, deren Abbildungsfehler Fehler (z.B. Abbildungsfehler von Linsen) die Detailgenauigkeit der Abbildung negativ beeinflussen können.

### Strahlführungsvariante 2 im Strahlführungs- und -Formungssystem

In der Strahlführungsvariante 2 gemäß Fig. 3 werden ebenfalls eine Zusatzlinse (16), ein aus zwei Linsen bestehendes Feldlinsensystem (8) und ein beispielsweise aus zwei Linsen bestehendes Objektiv (10) verwendet. In Fig. 3 sind nur die Hauptebenen der Linsen dargestellt. Der Zwischenfokus (17) des Strahlengangs befindet sich wieder zwischen der Zusatzlinse (16) und der Blenden-Maskenkombination (6,7). Der Fokus 2 (22) des aus dem Feldlinsensystem (8) und dem Objektiv (10) bestehenden abbildenden optischen Systems befindet sich bei dieser Strahlführungsvariante 2 zwischen Feldlinsensystem (8) und Objektiv (10), so dass zur Vermeidung eines Plasmas im Bereich des Fokus 2 (22) die Vakuumküvette (23) mit zwei transmittierenden Fenstern für die Laserstrahlung eingesetzt werden kann (siehe Fig. 4a); der Durchmesser der transmittierenden Fensterflächen muss so groß gewählt werden, dass auch die Propagation der gebeugten Laserstrahlanteile (2a) (siehe Fig. 3) wenigstens der Beugungsordnungen 1 bis 3 ungehindert möglich ist. Die Abbildungsebene (11) befindet sich auf der Substratoberfläche (12). Zum Schutz des Objektivs (10) vor der Belegung mit ablatiertem Material vom Substrat (13) ist ein Schutzgasdüsensystem (24) angebracht, das zwischen dem Objektiv (10) und dem Substrat (13) eine Gasströmung erzeugt.

Die punktiert dargestellten Rechtecke deuten weitere 90°- Umlenkspiegel (29, 30, 31) an, die zur Faltung des Strahlengangs genutzt werden können und die Kompaktheit des gesamten Strahlführungs- und -Formungssystems erhöhen (siehe Fig. 5).

Wenn ein genügend langer Raum zur Verfügung steht, kann das gesamte optische System aber auch ohne die Umlenkspiegel (9, 29, 30, 31) realisiert werden.

Die Strahlführungsvariante 2 ist vorzugsweise für die Realisierung größerer Abbildungsquerschnitte im Bereich von größer einigen 10 µm² bis zu 1 mm² geeignet.

### Ausführungsbeispiel : fs- Laser-Maskenprojektion, Strahlführungsvariante 2

In Fig. 5 ist ein fs-Laser Maskenprojektionssystem zur Realisierung der Strahlführungsvariante 2 dargestellt (siehe Fig. 3). Die Maßpfeile mit den Maßzahlen geben die Abstände der optischen Bauelemente in Millimeter an. Es werden vier 90°- Umlenkspiegel (29, 30, 31, 9) eingesetzt, um einen kompakten Aufbau des Systems zu erreichen und seine Integration in eine fs-Laser-Mikrostrukturierungsanlage vom Typ FS-150-10 der Firma "3D-Mikromac AG", die für die Mikrostrukturierung mittels des fs-Laser-Fokusverfahrens ausgelegt ist, zu ermöglichen. Als Femtosekundenlaser wird in dieser Anlage ein Laser vom Typ Clark MXR CPA 2010 verwendet, der folgende Parameter besitzt: Zentrale Wellenlänge 775 nm, Pulsdauer 150 fs, Pulsenergie 1 mJ, Pulswiederholfrequenz 1 kHz; Strahldurchmesser am Laserausgang 3 mm, gaußförmige Intensitätsverteilung über den Laserstrahlquerschnitt. Mit Hilfe des Strahlaufweiters (3) wird der Strahldurchmesser auf Rs = 6 mm vergrößert und mittels des Homogenisierers (4) und der Zusatzlinse (16) wird eine top flat Intensitätsverteilung mit einer Laserstrahlpulsfluenz von 3 mJ/cm² im homogenen Fleck am Ort P geformt. Mit Hilfe der Maske (6), die eine quadratische Öffnung mit den Kantenlängen a_{O} = 3,54 mm besitzt, wird dabei im homogenen Fleck am Ort P, an dem die Maske (7) positioniert ist, das Intensitätsprofil des Laserstrahlpulses geformt.

Mit Hilfe des Feldlinsensystems (8) und dem Abbildungsobjektiv (10), das eine Brennweite von 100 mm besitzt, wird in der Bildweite b = 110 mm in der Abbildungsebene (11) eine verkleinerte Abbildung (14) des mit der Blende (6) erzeugten Laserstrahlquerschnitts und mit der Maske (7) geformten Laserstrahlintensitätsprofils mit einem Abbildungsverhältnis von V = 11:1 und mit einer Laserstrahlpulsfluenz von 280 mJ/cm² erzeugt.

### Vorteile der erfindungsgemäßen Lösung

Durch den Einsatz des fs- und ps-Maskenprojektionsverfahrens können Mikrostrukturen mit Detailabmessungen bis in den Submikrometerbereich erzeugt werden. Dazu gehören beispielsweise optische Beugungsgitter für den sichtbaren Wellenlängenbereich mit Gitterperioden von 1 µm und darunter. Die vorzugsweise durch schichtweisen strukturierten Abtrag erzeugten dreidimensionalen Mikrostrukturen besitzen eine hohe Kantenschärfe, eine hohe Wandsteilheit sowie geringe Wand- und Bodenrauhigkeiten. Durch die geringe thermische- und Stoßwellen-Belastung der angrenzenden, nicht strukturierten Substratbereiche werden Materialmodifizierungen sowie Ausplatzungen an den Strukturkanten bei der Strukturierung spröder Materialien weitestgehend vermieden. Bei genügend hoher Pulsenergie der eingesetzten Laser und der daraus resultierenden möglichen Größe des Querschnitts des homogenen Flecks und damit auch der Maske kann bei gleicher vorgegebener Geometrie der transmittierenden Maskenöffnungen und ihres Abstandes zueinander mittels der so entstehenden Teilstrahlen eine Mehrstrahlbearbeitung im Mikrobereich, z.B. paralleles Erzeugen von grabenförmigen und pyramidenstumpfförmigen Strukturen oder paralleles Strukturieren bzw. Trennen von Dünnschichtstapeln, durchgeführt werden.

## Patentansprüche

1. Vorrichtung zur Maskenprojektion von Femto- und Pikosekunden-Laserstrahlen auf eine Substratoberfläche,
**dadurch gekennzeichnet,**
**dass** der aus Laserstrahlpulsen bestehende Laserstrahl (2) an einem Ort (P) der optischen Achse (5) zu Laserstrahlpulsen mit vergrößertem Laserstrahlquerschnitt oder zu Laserstrahlpulsen mit verkleinertem Laserstrahlquerschnitt geformt ist und eine homogene Intensitätsverteilung über den Laserstrahlquerschnitt besitzt,
**dass** an dem Ort (P) nacheinander eine Blende (6) mit vorgegebener Blendenöffnungsgeometrie und eine Maske (7) mit vorgegebener Maskenöffnungsgeometrie in den Strahlengang positioniert sind,
**dass** die Vorrichtung weiter beinhaltet ein Feldlinsensystem (8) und ein Abbildungsobjektiv (10), derart positioniert, dass die von der Blende (6) und der Maske (7) transmittierten ungebeugten und gebeugten Strahlanteile der Laserstrahlpulse mit Hilfe des Feldlinsensystems (8) so in das Abbildungsobjektiv (10) mit vorgegebener Apertur gelenkt werden, dass in der Abbildungsebene (11) eine detailgenaue, mit einem vorgegebenen Abbildungsverhältnis (V), verkleinerte Abbildung (14) des von der Blende und der Maske erzeugten Intensitätsprofils über den Laserstrahlquerschnitt der Laserstrahlpulse entsteht,
und die Vorrichtung weiter **dadurch gekennzeichnet ist,**
**dass** in einer Strahlführungsvariante 1 ein Zusatzlinsensystem (16), das Feldlinsensystem (8) und das Abbildungsobjektiv relativ zueinander so positioniert werden, dass ein Fokus 1 (19) zwischen dem Abbildungsobjektiv (10) und der Substratoberfläche (12) entsteht und dass in einer Strahlführungsvariante 2 das Zusatzlinsensystem (16), das Feldlinsensystem (8) und das Abbildungsobjektiv relativ zueinander so positioniert werden, dass ein Fokus 2 (22) zwischen dem Feldlinsensystem (8) und dem Abbildungsobjektiv (10) entsteht,
**dass** mindestens eine Vakuumküvette vorhanden ist, die den Bereich des Fokus 1 (19) bzw. des Fokus 2 (22) umschließt.

2. Vorrichtung nach Anspruch 1,
**dadurch gekennzeichnet,**
**dass** zwischen dem Feldlinsensystem (8) und dem Abbildungsobjektiv (10) ein 90°-Umlenkspiegel (9) angeordnet ist.

3. Vorrichtung nach Anspruch 1 oder 2
**dadurch gekennzeichnet,**
**dass** Mittel zur Variation des Abstandes (s) zwischen der Hauptebene (35) des Abbildungsobjektivs (10) und der Substratoberfläche (12) vorhanden sind, mit dessen Hilfe die Abbildungsebene (11), deren vorgegebene Position im Abstand der Bildweite (b) von der Hauptebene (35) des Abbildungsobjektivs (10) durch Variation des Abstandes (s) zwischen der Hauptebene des Abbildungsobjektivs und der Substratoberfläche (12) wahlweise über, auf oder unter die Substratoberfläche (12) gelegt wird.

4. Vorrichtung nach Anspruch 3
**dadurch gekennzeichnet,**
**dass** die Mittel zur Variation des Abstandes (s) zwischen der Hauptebene (35) des Abbildungsobjektivs (10) und der Substratoberfläche (12) die z-Achse des xyz-Koordinatentischs (32) ist, auf dem das Substrat (13) befestigt ist.

5. Vorrichtung nach Anspruch 3
**dadurch gekennzeichnet,**
**dass** die Mittel zur Variation des Abstandes (s) zwischen der Hauptebene (35) des Abbildungsobjektivs (10) und der Substratoberfläche (12) die Linearachsen (33, 34) sind, mit deren Hilfe das an diesen Linearachsen befestigte Feldlinsensystem (8) und das Abbildungsobjektiv (10) entlang der optischen Achse (5) um einen vorgegebenen Weg verschiebbar angeordnet sind.

6. Vorrichtung nach einem der Ansprüche 1 bis 5,
**dadurch gekennzeichnet,**
**dass** in der Strahlführungsvariante 1 zwischen der mindestens einen Vakuumküvette (20) und der Substratoberfläche (12) eine Cross-Jet-Schutzgasdüse (21) angeordnet ist.

7. Vorrichtung nach einem der Ansprüche 1 bis 5,
**dadurch gekennzeichnet,**
**dass** in der Strahlführungsvariante 2 zwischen dem Abbildungsobjektiv (10) und der Substratoberfläche (12) eine Schutzgasdüsensystem (24) angebracht ist.

8. Vorrichtung nach einem der Ansprüche 1 bis 7,
**dadurch gekennzeichnet,**
**dass** die Aperturen der optischen Bauteile, die wenigstens das Feldlinsensystem (8), das Abbildungsobjektiv (10) und die mindestens eine Vakuumküvette umfassen, so groß gewählt sind, dass auch die infolge der vorgegebenen Maskenöffnungsgeometrie der Maske (7), gebeugten Laserstrahlanteile von der ersten bis wenigstens zur dritten Beugungsordnung auf der Substratoberfläche mit abgebildet werden.

9. Vorrichtung nach einem der Ansprüche 1 bis 8,
**dadurch gekennzeichnet,**
**dass** der eingesetzte Laser (1) im "burst mode" betrieben wird.

10. Vorrichtung nach einem der Ansprüche 1 bis 9,
weiter umfassend einen Strahlaufweiter (3) oder einen Strahlquerschnittsverringerer (3); und
eine zwischen dem Laser (1) und dem Strahlaufweiter (3) oder Strahlquerschnittsverringerer (3) positionierte Vorrichtung (15) zur Erzeugung der zweiten Harmonischen (Frequenzverdopplung, SHG) oder der dritten Harmonischen (Frequenzverdreifachung, THG) oder der vierten Harmonischen (Frequenzvervierfachung, FHG),
**dadurch gekennzeichnet,**
**dass** die Femtosekunden-Laserstrahl-Pulse oder die Pikosekunden-Laserstrahl-Pulse nach ihrem Austritt aus dem Laser (1) jeweils die Vorrichtung (15) zur Erzeugung der zweiten Harmonischen (Frequenzverdopplung, SHG) oder der dritten Harmonischen (Frequenzverdreifachung, THG) oder der vierten Harmonischen (Frequenzvervierfachung, FHG) durchlaufen und wenigstens der Strahlaufweiter (3) oder Strahlquerschnittsverringerer (3), das Zusatzlinsensystem (16), die Blende (6), die Maske (7), das Feldlinsensystem (8), das Abbildungsobjektiv (10) und die mindestens eine Vakuumküvette eine für die Transmission der entstehenden Photonenstrahlung mit der halben oder eindrittel oder einviertel der Grund-Wellenlänge geeignet konstruiert sind.
